# EUROPEAN PATENT APPLICATION

(11) **EP 1 481 797 A1**
(43) Date of publication of application: **01.12.2004**
(21) Application number: 03445063.5
(22) Date of filing: 23.05.2003
(51) Int. Cl.: B32B 21/00, E04F 15/04

(54) **Method for producing a layered material and a layered material**

(71) Applicant: Casco Surfaces AB, 100 61 Stockholm (SE)
(72) Inventor: Bischoff, Monika Barbara, 47269 Duisburg (DE); Bruns, Alexandra, 44809 Bochum (DE); Guth, Michael, 47178 Duisburg (DE); Hemel, Constantijn Bernardus, 40459 Essen (DE); Krönke, Thomas Gerhard Willi, 42555 Velbert (DE); Thews, Thomas, 58511 Lüdenscheid (DE); Wentzel, Detlef Andreas, 45257 Essen (DE)
(74) Representative: Von Renesse, Dorothea, Dr.

(57) **Abstract**

The present invention relates to a method for producing a layered material, the layered material comprising a carrying layer and one or more further layers, wherein at least one of the further layers comprises thermally expandable microspheres, the method comprising attaching the layer comprising thermally expandable microspheres to another layer of the layered material, and thereafter expanding the microspheres. It also relates to a layered material comprising two or more layers of which one is a carrying layer, wherein at least one of the layers positioned under the carrying layer comprises expanded thermoplastic microspheres. It further relates to a composition for impregnating, or coating, a substrate, comprising thermally expandable microspheres.

## Description

The present invention relates to a layered material and a method for producing a layered material. It also relates to a composition for impregnating a substrate.

Hard surfaces of flooring materials such as wooden flooring or laminate flooring materials are known to generate disturbing noise when walked upon. Depending on the structure of the flooring material, the generation and transmission of sound varies. For example, laminated flooring materials usually have a carrying layer of a Medium Density Fibre Board, which usually gives considerable more noise problems than a solid wood layer. However, also flooring materials such as parquet flooring, which usually consists of only solid wood layers, may give noise problems, especially when floating instead of being glued to the ground completely.

A typical decorative laminate for flooring comprises layers of resin impregnated papers attached onto a carrying layer of a rigid material. The upper layers comprise a decorative sheet and usually also an overlay and one or more resin impregnated paper layers under the decorative sheet. Onto the underside of the carrying layer is usually attached a balancing backing layer comprising a resin-impregnated paper to prevent warping of the laminate. A decorative laminate is usually manufactured by assembling the layers constituting the laminate and pressing the assembly under heat so that the resin in impregnated layers cures, forming a uniform laminate.

A parquet flooring material usually comprises a carrying layer of low quality wood or plywood, a surface layer of high quality wood and a backing veneer of low quality wood.

Several attempts have been made to reduce noise generated when walking on flooring materials.

WO 02/47906 A1 discloses a decorative laminate where a foil of an elastomer is arranged on the upper side of a carrying core.

EP 1 247 923 A1 and WO 01/09461 A1 disclose a floor covering with sound-proofing properties having an underside of a thermoplastic material.

However, in EP 1 247 923 A1 and WO 01/09461 A1, an extra step is needed in the production process when the thermoplastic layer is applied onto an already attached backing layer of a laminated flooring material.

WO 01/45940 relates to an abrasion-resistant decor sheet comprising a protective overlay containing expanded thermoplastic microspheres. However, the problem with sound transmission is not discussed at all.

Thus, there is a need of a flooring material with good sound damping properties, which can be produced in a simple way by small adaptations of the production methods already used.

### The invention

According to the invention it has surprisingly been found possible to achieve the above mentioned objects by a method for producing a layered material, the layered material comprising a carrying layer and one or more further layers, wherein at least one of the further layers comprises thermally expandable microspheres, the method comprising attaching the layer comprising thermally expandable microspheres to another layer of the layered material, and thereafter expanding the microspheres. Suitably, the layered material comprises an upper side and an underside, in relation to the carrying layer, the upper side suitably being the side either comprising a decorative layer, or, intended to accept a layer of a material, visible to the end-user of the layered material, such as paint or wall paper. Preferably, the layered material comprises an upper decorative layer. The layer comprising thermally expandable microspheres is suitably positioned under the carrying layer.

In one preferred embodiment of the invention, the method suitably comprises: bringing together the layer comprising thermally expandable microspheres with another layer of the layered material, thereby forming an assembly, pressing and heating the assembly above the temperature at which the microspheres starts to expand, at atmospheric pressure, and, releasing the pressure from the assembly, whereupon the microspheres expand. The main expansion of the microspheres suitably takes place directly when the pressure has been relieved.

In another preferred embodiment of the invention, the method comprises the steps of: joining the layer comprising thermally expandable microspheres onto another layer of the layered material, followed by heating the layer comprising thermally expandable microspheres, without substantial pressing, above the temperature at which the microspheres starts to expand.

The method suitably further comprises a step of impregnating, or coating, a substrate with a composition comprising thermally expandable microspheres, thereby forming the layer comprising thermally expandable microspheres.

The layer comprising thermally expandable microspheres is suitably positioned 0 to 5 layers deep into the layered product, preferably 0 to 2 layers. Most preferably, the layer comprising thermally expandable microspheres is an outermost layer of the layered material.

The layered material is suitably a flooring material. Examples of suitable flooring materials are: a decorative laminate flooring material, a parquet flooring material, and resilient flooring materials such as vinyl floorings. Preferably, the flooring material is a decorative laminate flooring material. Alternatively, the flooring material is preferably a parquet flooring material.

The layered material can also suitably be a wall- or roofing element.

The layer comprising thermally expandable microspheres suitably comprises a paper.

The present invention further comprises a layered material comprising two or more layers of which one is a carrying layer. The layered material comprises an upper side and an underside, in relation to the carrying layer, the upper side being the side either comprising a decorative layer, or, intended to accept a layer of material, visible to the end-user of the layered material, such as paint or wall paper. Preferably, the layered material comprises an upper decorative layer. The at least one layer comprising thermally expandable microspheres is positioned under the carrying layer. Suitably, an outermost layer of the layered material comprises expanded thermoplastic microspheres. The layer comprising expanded thermoplastic microspheres is suitably positioned 0 to 5 layers deep into the layered product, preferably 0 to 2 layers. Most preferably, the layer comprising expanded thermoplastic microspheres is an outermost layer of the layered material. Suitably, the layer of the layered material comprising expanded thermoplastic microspheres further comprises a polymer phase apart from the thermoplastic microspheres. Preferably, the polymer phase comprises a polyurethane. Suitably, the layered material is a flooring material. Suitably, the flooring material comprises an upper decorative layer, a carrying layer and a backing layer. Preferably, the layered material is a decorative laminate flooring material. Suitably, the backing layer comprises expanded thermoplastic microspheres. Alternatively, the flooring material suitably comprises a surface layer, a carrying layer, a backing veneer and a backing layer. Preferably, the flooring material is a parquet flooring material. Suitably, the backing layer comprises expanded thermoplastic microspheres. The layered material can also suitably be a wall- or roofing element.

The present invention further relates to a treating composition for impregnating, or coating, a substrate, comprising thermally expandable microspheres and a polymer dispersion. The polymer dispersion is suitably a dispersion of a polymer having a glass transition temperature of from about -100 to about +10°C, preferably from about -80 to about -20°C. Examples of suitable polymer dispersions are a polyurethane dispersion, a polyacrylate dispersion, a polyester dispersion a PVC dispersion, and a plastisol dispersion. Preferably, the polymer dispersion is a polyurethane dispersion.

The amount of thermally expandable microspheres in the treating composition may vary within broad limits, depending on the desired properties of the finished product, and is suitably from about 1 to about 80 weight %, preferably from about 5 to about 25 weight %. The ratio thermally expandable microspheres to dispersed polymer in the treating composition, calculated as dry matter, is suitably from about 1:1 to about 1:10, preferably from about 1:3 to about 1:7.

Furthermore, the present invention relates to the use of the treating composition for impregnating, or coating, a substrate. The impregnated, or coated, substrate is suitably used as a backing layer of a flooring material. The substrate is suitably a paper.

Furthermore, the present invention relates to an impregnated, or coated, substrate comprising thermally expandable microspheres and a continuous phase of a thermoplastic polymer. The thermoplastic polymer suitably has a glass transition temperature of from about -100 to about +10°C, preferably from about -80 to about -20 °C. The thermoplastic polymer is suitably a polyurethane. The amount thermally expandable microspheres per unit weight of the impregnated, or coated, substrate is suitably from about 0.1 to about 80 weight %, preferably from about 1 to about 50 weight %, most preferably from about 2 to about 10 weight %. The substrate is suitably a paper.

Finally, the present invention relates to the use of an impregnated, or coated, substrate as a part of a layered material.

The layer comprising thermally expandable microspheres according to the method of the invention may comprise any type of impregnable substrate, including paper and woven and non-woven textiles. Suitably, the layer comprising thermally expandable microspheres comprises a paper. Suitably, the paper has a weight of from about 20 to about 250 g/m², preferably from about 50 to about 140 g/m². The paper is suitably a kraft paper/regenerated paper.

The substrate is suitably impregnated with one or more curable resins. Suitable curable resins for impregnating the substrate according to the present invention are thermosetting resins, such as melamine resins, for example, melamine-formaldehyde, urea resins, for example, urea-formaldehyde, phenolic resins, for example, phenolformaldehyde, or mixtures thereof. Preferably, a melamine-formaldehyde resin is used for impregnating the backing layer. The substrate is suitably impregnated with an amount of from about 40 to about 300 g/m² of a curable resin, preferably from about 80 to about 150 g/m².

The substrate can be impregnated with one or more curable resins by various conventional techniques of applying resin compositions, such as baths, rollers, doctor blades, air knife, metering roll, doctor bars, etc. The resin compositions can be applied in one or more steps with drying and/or partial curing between the application stages.

The impregnation, or coating, of the substrate with thermally expandable microspheres suitably takes place after the impregnation with the one or more resin compositions. Suitably, the impregnation, or coating, of the substrate with thermally expandable microspheres takes place by coating or impregnating the substrate with a treating composition comprising thermally expandable microspheres.

Thermally expandable microspheres suitable for use in the present invention have a thermoplastic polymer shell enclosing a propellant. The thermoplastic polymer shell may consist of a copolymer of monomers selected from the group: acrylonitrile, methacrylonitrile, alpha-ethoxyacrylonitrile, alpha-chloroacrylonitrile, fumaronitrile, vinylidene chloride, vinyl chloride, methacrylic ester, acrylic ester, styrene, vinyl acetate, butadiene, neoprene and mixtures thereof. The thermoplastic microspheres may be produced in conventional fashion, for instance as set forth in US 3,615,972, which hereby is incorporated by reference. The propellant is normally a liquid having a boiling temperature not higher than the softening temperature of the thermoplastic polymer shell. The propellant, also called the blowing agent, expanding agent or foaming agent, can be hydrocarbons such as n-pentane, isopentane, neopentane, butane, isobutane, hexane, isohexane, neohexane, heptane, isoheptane, octane and isooctane, or mixtures thereof. Aside from them, other hydrocarbon types can also be used, such as petroleum ether, and chlorinated or fluorinated hydrocarbons, such as methyl chloride, methylene chloride, dichloroethane, dichloroethylene, trichloroethane, trichloroethylene, trichlorofluoromethane etc. The propellant suitably makes up 5-40 weight % of the microsphere. Upon heating, the propellant evaporates to increase the internal pressure at the same time as the shell softens, resulting in significant expansion of the microspheres, normally from about 2 to about 5 times their diameter. The temperature at which the expansion starts is called Tₛₜₐᵣₜ, while the temperature at which maximum expansion is reached is called Tₘₐₓ, both determined at a temperature increase rate of 20°C per minute. The thermally expandable microspheres used in the present invention suitably have Tₛₜₐᵣₜ within the range of from about 40 to about 200°C, preferably from about 50 to about 150°C, most preferably from about 70 to about 130°C, while Tₘₐₓ suitably is within the range of from about 60 to about 250 °C, preferably from about 80 to about 210°C, most preferably from about 100 to about 200°C. The particle size of the expandable microspheres may vary within broad limits and is chosen with respect to the properties desired for the finished product. Suitable examples of particles sizes for the expandable microspheres could be 1 to 1000 µm, preferably 2 to 500 µm and most preferably 5 to 50 µm.

The carrying layer according to the present invention is suitably rigid, and can be made of any suitable material such as a wood based material or a polymer based material. Suitably, the carrying layer is made of a wood based material such as solid wood, plywood, particleboard, fibreboard, and chipboard. Preferably, the carrying layer is made of a particle- or fibreboard.

The laminate is suitably pressed at a temperature of from about 100 to about 250°C, preferably from about 125 to about 200 °C, at a pressure of from about 0.1 to about 10 MPa, preferably from about 2 to about 4 MPa.

In a preferred embodiment of the present invention, a kraft paper/regenerated paper is impregnated with a melamine resin in a first step, dried and subsequently impregnated with a slurry comprising from about 5 to about 25 weight % thermally expandable microspheres, and a dispersion of polyurethane wherein the ratio thermally expandable microspheres to dispersed polymer in the slurry, calculated as dry matter is from about 1:3 to about 1:7. Thereafter, the impregnated paper is dried and assembled and pressed at a pressure between about 2 and about 4 MPa, onto a carrying layer of MDF. After release of the pressure the microspheres expand and form a smooth layer.

The invention will now further be described in connection with the following example which, however, not should be interpreted as limiting the scope of the invention

### Example 1:

A regenerated paper was impregnated with a melamine resin, dried, and then impregnated with a slurry comprising 10 weight % thermally expandable microspheres, and a dispersion of polyurethane. The content of polyurethane in the slurry was 78 weight %. The paper was dried and assembled onto a layer of a Medium Density Fibre Board (MDF). The other side of the MDF was provided with a decorative sheet. The assembly was pressed at 160°C at a pressure of 25 MPa for 30 seconds.

The result was a decorative laminate having a smooth layer of expanded microspheres opposite the decorative layer. The decorative laminate gave excellent sound reducing properties.

## Claims

1. A method for producing a layered material, the layered material comprising a carrying layer and one or more further layers, wherein at least one of the further layers comprises thermally expandable microspheres, the method comprising attaching the layer comprising thermally expandable microspheres to another layer of the layered material, and thereafter expanding the microspheres.

2. A method according to claim 1, wherein the layered material comprises an upper layer, and the layer comprising thermally expandable microspheres is positioned under the carrying layer.

3. A method according to any one of the claims 1-2, comprising:
- bringing together the layer comprising thermally expandable microspheres with another layer of the layered material, thereby forming an assembly,
- pressing and heating the assembly above the temperature at which the microspheres starts to expand, at atmospheric pressure, and,
- releasing the pressure from the assembly, whereupon the microspheres expand.

4. A method according to any one of the claims 1-2, comprising the steps of:
- joining the layer comprising thermally expandable microspheres onto another layer of the layered material, followed by
- heating the layer comprising thermally expandable microspheres, without substantial pressing, above the temperature at which the microspheres starts to expand.

5. A method according to any one of the claims 1-4, further comprising a step of impregnating, or coating, a substrate with a composition comprising thermally expandable microspheres, thereby forming the layer comprising thermally expandable microspheres.

6. A method according to any one of the claims 1-5, wherein the layer comprising thermally expandable microspheres is an outermost layer of the layered material.

7. A method according to any one of the claims 1-6, wherein the layer comprising thermally expandable microspheres comprises a paper.

8. A method according to any one of the claims 1-7, wherein the layered material comprises an upper decorative layer.

9. A method according to any one of the claims 1-8, wherein the layered material is a decorative laminate flooring material.

10. A method according to any one of the claims 1-8, wherein the layered material is a parquet flooring material.

11. A layered material comprising two or more layers of which one is a carrying layer, the layered material having an upper side and an underside, wherein at least one of the layers positioned under the carrying layer comprises expanded thermoplastic microspheres.

12. A layered material according to claim 11, wherein an outermost layer comprises expanded thermoplastic microspheres.

13. A layered material according to any one of the claims 11-12, wherein the layer comprising expanded thermoplastic microspheres further comprises a polymer phase comprising a polyurethane.

14. A layered material according to any one of the claims 11-13, which is a flooring material comprising an upper decorative layer, a carrying layer and a backing layer.

15. A composition for impregnating, or coating, a substrate, comprising thermally expandable microspheres and a polymer dispersion.

16. A composition according to claim 15, wherein the polymer dispersion is a dispersion of a polymer having a glass transition temperature of from about -100 to about +10°C.

17. A composition according to any one of the claims 15-16, wherein the polymer dispersion is a polyurethane dispersion.

18. Use of a composition according to any of the claims 15-17 for impregnating, or coating, a substrate.

19. An impregnated, or coated, substrate comprising thermally expandable microspheres and a continuous phase of a thermoplastic polymer.

20. An impregnated, or coated, substrate according to claim 19, wherein the thermoplastic polymer is a polyurethane.

21. An impregnated, or coated, substrate according to any one of the claims 19-20, wherein the substrate is a paper.

22. Use of an impregnated, or coated, substrate according to any one of the claims 19-21, as a part of a layered material.
